# EUROPEAN PATENT APPLICATION

(11) **EP 4 332 868 A1**
(43) Date of publication of application: **06.03.2024**
(21) Application number: 22795393.2
(22) Date of filing: 24.03.2022
(51) Int. Cl.: G06Q 30/06, G06Q 50/10

(54) **WORK MACHINE RENTAL SYSTEM**

(30) Priority: 27.04.2021 JP 2021075269
(71) Applicant: KUBOTA CORPORATION, Osaka-shi, Osaka 556-8601 (JP)
(72) Inventor: MIURA Keisuke, Sakai-shi, Osaka 590-0823 (JP); IKEDA Ryo, Sakai-shi, Osaka 590-0823 (JP); KINUGAWA Ryosuke, Sakai-shi, Osaka 590-0823 (JP)
(74) Representative: Cabinet Beau de Loménie
(86) International application number: PCT/JP2022/013925
(87) International publication number: WO 2022/230474

(57) **Abstract**

In the case where a working machine (1) capable of performing a special action is rented out, a rental fee corresponding to performing the special action or not performing the special action is calculated.

A working machine rental system (100) includes: a rental setter (95) to make one or more settings for use in renting out a working machine (1) configured to perform a special action, the one or more settings including a selection to use or not use the special action; and a fee calculator (96) to: calculate a rental fee for the working machine (1) based on the one or more settings made by the rental setter (95); and change the rental fee for the working machine (1) if the special action is actually used or actually not used differently from the selection to use or not use the special action included in the one or more settings made by the rental setter (95).

## Description

### Technical Field

The present invention relates to a working machine rental system.

### Background Art

A working machine rental system disclosed in Patent Literature 1 is known. The working machine rental system of Patent Literature 1 includes: a first management server including a communicator to output, when a booking for working machine rental is made, first information which is working-machine-related information for cases where a specific working machine is rented out; and a second management server including a memory to store second information which is information about produced or sold working machine(s), wherein the second management server includes an issuer to issue command information including permitting or not permitting the rental of the working machine with reference to the first information and to the second information stored in the memory.

### Citation List

### Patent Literature

PTL 1: Japanese Unexamined Patent Application Publication No.2017-68453

### Summary of Invention

### Technical Problem

Some of the working machines such as a backhoe are configured to not only perform intended actions such as excavation but also perform a special action such as craning (lifting) by attaching, for example, a hook to the distal end of a boom. However, the fact is that, for example, in the case where a working machine capable of performing a special action is rented out, if the special action is performed in an unauthorized manner when the rental fee is set in the same manner as a working machine incapable of performing the special action or when the working machine capable of performing the special action is rented for a rental fee on the condition that the special action not be used (for a reduced fee), it is not possible to address such an unauthorized use.

In view of the above problems, an object of the present invention is to, when renting out a working machine capable of performing a special action, calculate a rental fee corresponding to performing or not performing the special action.

### Solution to Problem

A working machine rental system according to an aspect of the present invention includes: a rental setter to make one or more settings for use in renting out a working machine configured to perform a special action, the one or more settings including a selection to use or not use the special action; and a fee calculator to: calculate a rental fee for the working machine based on the one or more settings made by the rental setter; and change the rental fee for the working machine if the special action is actually used or actually not used differently from the selection to use or not use the special action included in the one or more settings made by the rental setter.

In an aspect of the present invention, the working machine rental system further includes a display to, during a rental period of the working machine, display a time at or during which the special action was performed.

In an aspect of the present invention, the fee calculator increases the rental fee if the one or more settings made by the rental setter include the selection to not use the special action and the special action is performed during a rental period of the working machine.

In an aspect of the present invention, the fee calculator reduces the rental fee if the one or more settings made by the rental setter include the selection to use the special action and the special action is not performed during a rental period of the working machine.

In an aspect of the present invention, the working machine rental system further includes a remote stopper to remotely stop the craning if the one or more settings made by the rental setter include the selection to not use the special action and the special action is performed during a rental period of the working machine.

In an aspect of the present invention, the special action is craning or an action performed by the working machine with an attachment other than a bucket attached thereto. Advantageous Effects of Invention

The present invention makes it possible to, when renting out a working machine capable of performing a special action, calculate a rental fee corresponding to performing or not performing the special action.

### Brief Description of Drawings

[FIG. 1] FIG. 1 is a general view of a working machine rental system.
[FIG. 2] FIG. 2 illustrates an example of a display.
[FIG. 3] FIG. 3 illustrates an example of an input screen of the display.
[FIG. 4] FIG. 4 shows an example of a rental fee table.
[FIG. 5A] FIG. 5A shows an example of rental data for cases where craning is not used.
[FIG. 5B] FIG. 5B shows an example of rental data for cases where craning is used.
[FIG. 6A] FIG. 6A shows an example of amounts by which the rental fee is increased.
[FIG. 6B] FIG. 6B shows an example of amounts by which the rental fee is reduced.
[FIG. 7] FIG. 7 is a side view of an example of a working machine.

### Description of Embodiments

The following description discusses an embodiment of the present invention with reference to drawings as necessary.

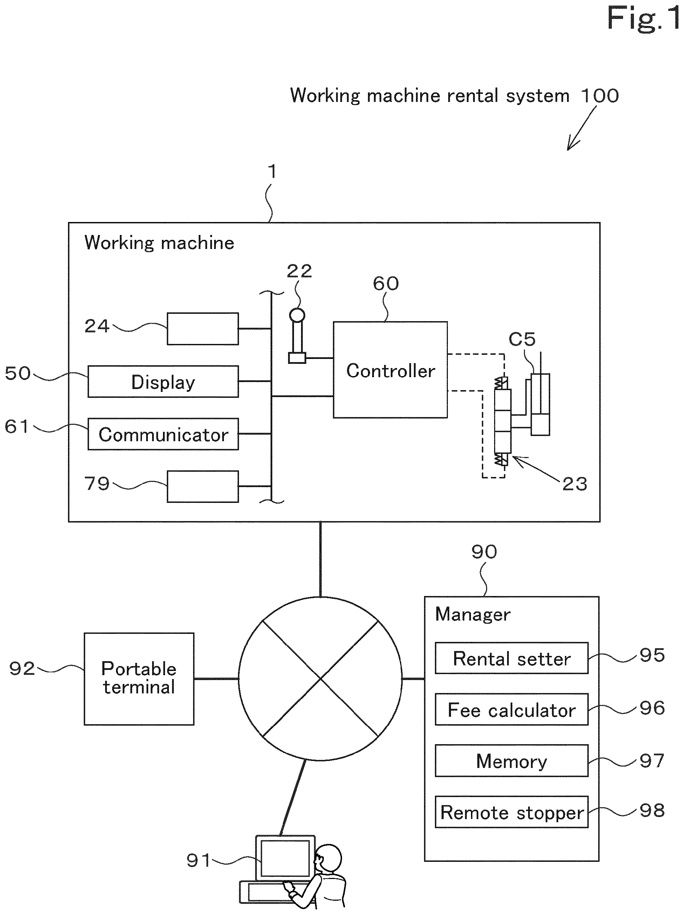

FIG. 1 is a general view of a working machine rental system 100. As illustrated in FIG. 1, the working machine rental system 100 is a system to manage the rental of construction machine(s) such as backhoe(s).

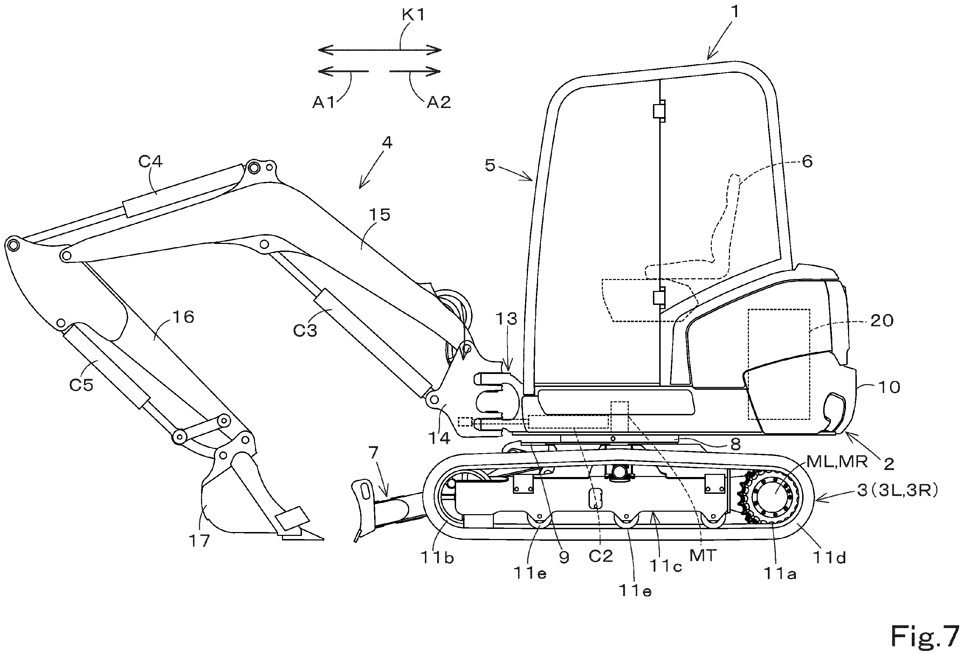

The following first discusses a working machine 1. FIG. 7 is a side view of an example of the working machine 1. The working machine 1 in FIG. 7 is a backhoe (excavator) which is an example of a swiveling working machine. Note that the working machine applied to the working machine rental system 100 is not limited to a backhoe capable of excavation, provided that the working machine is capable of performing a special action such as craning (lifting) and performing action(s) for other work. The working machine 1 according to the present embodiment is capable of performing intended excavation and at least craning as a special action.

The working machine 1 includes a machine body (swivel base) 2, a traveling device 3, and a working device 4. A cabin 5 is provided on the machine body 2. The cabin 5 contains an operator's seat 6. In the present embodiment, a forward direction from an operator seated on the operator's seat 6 of the working machine 1 (the direction indicated by arrow A1 in FIG. 7) is referred to as a forward direction, a rearward direction from the operator (the direction indicated by arrow A2 in FIG. 7) is referred to as a rearward direction, a leftward direction from the operator (direction to the near side in FIG. 7) is referred to as a leftward direction, and a rightward direction from the operator (direction to the far side in FIG. 7) is referred to as a rightward direction.

A horizontal direction orthogonal to the front-rear direction K1 is referred to as a machine body width direction. A rightward or leftward direction from the widthwise center of the machine body 2 is referred to as a machine body outward direction. In other words, a machine body outward direction is one of the machine body width directions that goes away from the widthwise center of the machine body 2. A direction opposite to the machine body outward direction is referred to as a machine body inward direction. In other words, a machine body inward direction is one of the machine body width directions that approaches the widthwise center of the machine body 2.

As illustrated in FIG. 7, the traveling device 3 includes a traveling body 3L provided on the left side and a traveling body 3R provided on the right side. The traveling body 3L and the traveling body 3R are each a crawler traveling device including a driving wheel 11a, an idler wheel 11b, track rollers 11e, a frame 11c to rotatably support the driving wheel 11a, the idler wheel 11b, and the track rollers 11e, and a belt 11d around the driving wheel 11a, the idler wheel 11b, and the track rollers 11e. The frame 11c of the traveling body 3L has a first travel motor ML supported thereon. Power from the first travel motor ML is transmitted to the driving wheel 11a of the traveling body 3L. The frame 11c of the traveling body 3R has a second travel motor MR supported thereon. Power from the second travel motor MR is transmitted to the driving wheel 11a of the traveling body 3R.

A dozer device 7 is attached to a front portion of the traveling device 3. The dozer device 7 is configured to ascend and descend (raise and lower a blade) upon the extension and retraction of a dozer cylinder. Note that the working machine 1 may not include the dozer device 7.

The machine body 2 is supported on the traveling device 3 via a swivel bearing 8 such that the machine body 2 is rotatable about a vertical axis (axis extending in the up-and-down direction). The machine body 2 is driven to rotate by a swivel motor MT including a hydraulic motor (hydraulic actuator). The machine body 2 includes a swivel base plate 9 which rotates about a vertical axis, and a weight 10. The swivel base plate 9 is made of, for example, sheet steel, and is connected to the swivel bearing 8. The weight 10 is provided at a rear portion of the machine body 2. The machine body 2 contains a prime mover 20 in a rear portion thereof. The prime mover 20 is a diesel engine. Note that the prime mover 20 may be an electric motor or a hybrid prime mover including both a diesel engine and an electric motor.

The machine body 2 has a support bracket 13 at a front portion thereof such that the support bracket 13 is somewhat displaced rightward from the widthwise center of the machine body 2. The support bracket 13 has attached thereto a swing bracket 14 such that the swing bracket 14 is swingable about a vertical axis. The swing bracket 14 has the working device 4 attached thereto.

As illustrated in FIG. 7, the working device 4 includes working bodies including, for example, a boom 15, an arm 16, and a bucket (normal working tool) 17. The proximal portion of the boom 15 is pivotally attached to the swing bracket 14 such that the boom 15 is pivotable about a lateral axis (axis extending in the machine body width direction). With this, the boom 15 is swingable up and down. The arm 16 is pivotally attached to the distal portion of the boom 15 such that the arm 16 is pivotable about a lateral axis. With this, the arm 16 is swingable forward and rearward and upward and downward. The bucket 17 is attached to the distal portion of the arm 16 such that the bucket 17 is capable of shoveling and dumping. The working machine 1 can have attached thereto some other working tool (auxiliary attachment) that can be driven by a hydraulic actuator instead of or in addition to the bucket 17. Examples of such other working tool (auxiliary attachment) include hydraulic breakers, hydraulic crushers, angle brooms, earth augers, pallet forks, sweepers, mowers, and snow blowers.

The swing bracket 14 is swingable upon extension and retraction of a swing cylinder C2 in the machine body 2. The boom 15 is swingable upon extension and retraction of a boom cylinder C3. The arm 16 is swingable upon extension and retraction of an arm cylinder C4. The bucket 17 is capable of shoveling and dumping upon extension and retraction of a bucket cylinder (working tool cylinder) C5. The dozer cylinder, the swing cylinder C2, the boom cylinder C3, the arm cylinder C4, and the bucket cylinder C5 are each a hydraulic cylinder (hydraulic actuator). Note that the working device 4 need only be provided on the machine body 2, and may include element(s) other than the boom 15, the arm 16, and the bucket (working tool) 17. The boom cylinder C3, the arm cylinder C4, the bucket cylinder C5, and the like are each a hydraulic actuator to drive a corresponding working body.

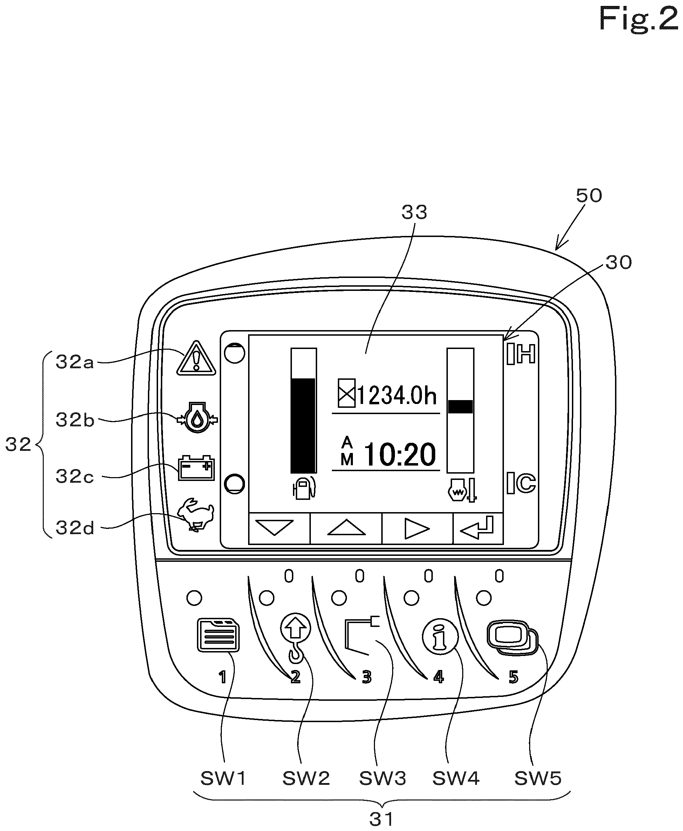

As illustrated in FIG. 1, the working machine 1 includes a display 50. As illustrated in FIG. 2, the display 50 includes a display portion 30 to display information relating to the working machine 1, and an input portion 31. The display portion 30 includes a fixed display portion 32 and a variable display portion 33.

The fixed display portion 32 includes a caution-advisory indicator 32a which turns ON to attract attention or give a warning while the working machine 1 is being driven, an oil indicator 32b which turns ON to indicate that engine oil is running short while the working machine 1 is being driven, a battery indicator 32c which turns ON to indicate that a battery is running short while the working machine 1 is being driven, and a travel indicator 32d which turns ON to indicate that the working machine 1 is traveling at high speed while the working machine 1 is being driven. The above-described caution-advisory indicator 32a, oil indicator 32b, battery indicator 32c, and travel indicator 32d, when in OFF state, each indicate that the above-described instance is not occurring. Note that the fixed display portion 32 may include any portion other than the caution-advisory indicator 32a, the oil indicator 32b, the battery indicator 32c, and the travel indicator 32d, provided that the portion indicates information relating to the working machine 1 by turning ON and OFF.

The variable display portion 33 displays various information about the working machine 1. The variable display portion 33 displays, for example, the rotation speed of the prime mover 20, fluid temperature, and/or water temperature, the remaining amount of fuel, various information about craning, and/or the like.

The input portion 31 includes button switches SW (SW1, SW2, SW3, SW4, SW5). For example, the button switch SW1 is used by a user of the working machine 1 to set the action, function, and/or the like of an attachment. The button switch SW2 is used to change the work mode to a lifting work mode (crane mode). The button switch SW3 is used to limit the swinging range of the arm 16. The button switch SW4 is used to provide a certain guidance (information) to the user via the variable display portion 33. The button switch SW5 is used to switch the display in the variable display portion 33.

As illustrated in FIG. 1, the working machine 1 includes a controller 60. The controller 60 includes a central processing unit (CPU) to execute instructions of program(s), one or more read only memories (ROM) storing computer program(s), one or more random access memories (RAM) in which control programs are loaded, storing unit(s) (one or more recording media) such as one or more memories storing control programs and data, and/or the like. The controller 60 performs various types of control, such as hydraulic pressure control, prime mover control, crane control, of the working machine 1. For example, the controller 60 controls control valves and/or the like to control the swing cylinder C2, boom cylinder C3, arm cylinder C4, bucket cylinder C5 (performs hydraulic pressure control) according to the operation of operation member(s). The controller 60 controls the rotation speed of the prime mover 20 (performs prime mover control).

When the button switch SW2 is selected (when in the crane mode), the controller 60 performs crane control in which craning is performed. An example of the crane control (craning) is control in which, when an operation member (manual operator) 22 is operated, the controller 60 permits the action of the bucket (working tool) 17 in the scooping direction, but prohibits the action of the bucket (working tool) 17 in the dumping direction. Specifically, in the crane mode, when the operation member 22 is operated by the operator to move the bucket 17 in the scooping direction, the controller 60 switches a control valve (bucket control valve) 23 from its neutral position to the scooping position to cause the bucket cylinder C5 to extend. When operation member 22 is operated by the operator to move the bucket 17 in the dumping direction, the controller 60 holds the control valve 23 in the neutral position.

Another example of the crane control (craning) is control in which the controller 60 sets the upper limit for the prime mover 20 such that the rotation speed of the prime mover 20 does not exceed a predetermined rotation speed. A further example of the crane control (craning) is control in which, when a travel switch 24 (which switches travel speed between high speed and low speed) is operated, the controller 60 holds the angle of the swash plates of the travel motors (first travel motor ML, second travel motor MR) in a first speed stage position so that the rotation speed of the travel motors (first travel motor ML, second travel motor MR) does not change to a high speed stage (second speed stage). When performing crane control, for example, the controller 60 converts the pressure of hydraulic fluid acting on the bucket cylinder C5 into load, and causes the display 50 to display the obtained load as the load during craning.

The communicator 61 is a communicator (communication module) to communicate directly or indirectly with external equipment. The communicator 61 is capable of performing wireless communication via, for example, wireless fidelity (Wi-Fi, registered trademark) which is an IEEE802.11 standard, Bluetooth (registered trademark) Low Energy (BLE), Low Power, Wide Area (LPWA), Low-Power Wide-Area Network (LPWAN), or the like which are communication standards. The communicator 61 may be a communicator (communication module) which performs wireless communication over a mobile telephone communication network or a data communication network.

As illustrated in FIG. 1, the working machine rental system 100 includes the working machine 1, a manager 90, a computer 91, and a portable terminal 92. Note that FIG. 1 illustrates a single working machine 1, a single computer 91, and a single portable terminal 92. However, one or more working machines 1, one or more computers 91, and one or more portable terminals 92 are included in the working machine rental system 100 appropriately.

The manager 90 manages renting out (rental) of the working machine 1. The manager 90 is, for example, a server to which a stationary computer 91 such as a personal computer, a portable computer (portable terminal) 92 such as a tablet, a smartphone, and/or a laptop computer, and/or the like are connectable via a communication network. The manager 90 includes a rental setter 95, a fee calculator 96, a memory 97, and a remote stopper 98. The memory 97 includes a memory, a hard disk, and/or the like. The rental setter 95, the fee calculator 96, and the remote stopper 98 include electric/electronic circuit(s) in the manager 90, program(s) stored in the manager 90, and/or the like.

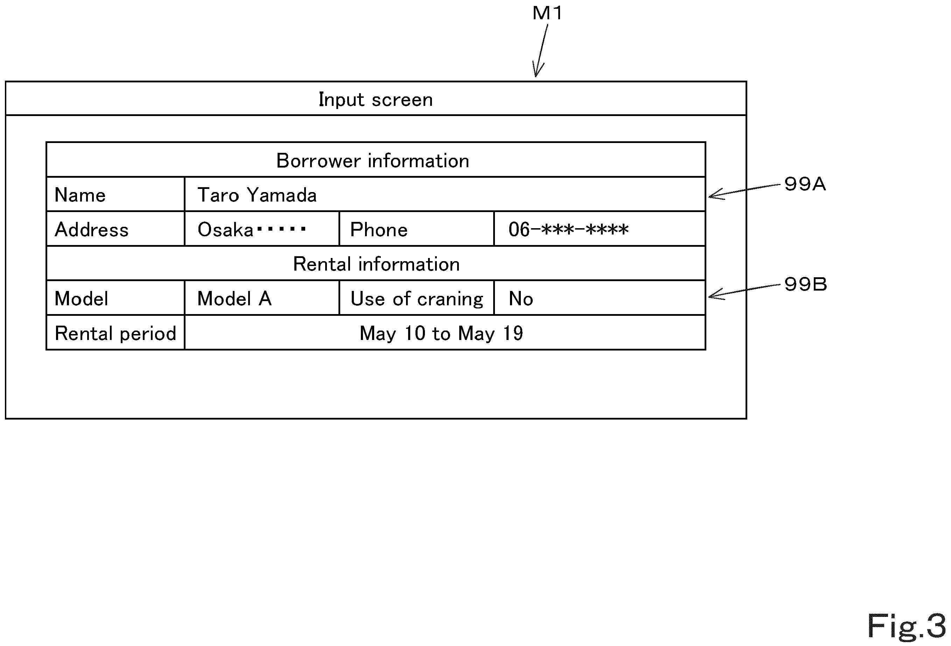

When the computer 91 or the portable terminal 92 connects to the manager 90 and a predetermined operation is performed, the rental setter 95 causes the computer 91 or the portable terminal 92 to display an input screen (for example, Web screen) M1 (see FIG. 3).

The input screen M1 is a screen for input of items (information) for renting out (for rental of) a working machine. The input screen M1 includes a first input portion 99A and a second input portion 99B. The first input portion 99A is for input of information about a borrower (renter) (borrower information) of the working machine 1, such as the address, name, phone number of the borrower, for example. The second input portion 99B is for input of rental information which is information about the preferences of the borrower (renter) of the working machine 1, such as the model of the working machine 1 the borrower wishes to borrow, a rental period (start date of the rental, end date of the rental), and a selection to use or not use craning, for example. The rental information may include, for example, the number of machines the borrower wishes to borrow, and/or the like, in addition to or instead of those listed above.

Upon user operation of an interface such as operation key(s) or a microphone of the computer 91 or the portable terminal 92, the above-described information is inputted into the first input portion 99A and the second input portion 99B of the input screen M1. After the input, upon a predetermined operation by the user of an interface of the computer 91 or the portable terminal 92, the content inputted on the input screen M1 is confirmed, and the content is transmitted from the computer 91 or the portable terminal 92 to the manager 90.

Upon receipt by the manager 90 of the content inputted on the input screen M1 transmitted from the computer 91 or the portable terminal 92, the rental setter 95 causes the memory 97 to store the borrower information and the rental information (FIG. 3) included in the content such that the borrower information and the rental information are associated with each other. The rental setter 95 sets the model and the rental period of the working machine to be rented out, based on the rental information. In the case of renting out a working machine 1 capable of craning, the rental setter 95 also makes a setting indicating a selection to use or not use craning.

For example, in the case where the user inputs "Yes" indicating using craning on the input screen M1 as shown in FIG. 3 in order to use craning with the working machine 1, the rental setter 95, based on the rental information indicating such, makes a setting indicating that craning is to be used (a selection to use craning) during the rental period of the working machine 1. On the contrary, in the case where the use inputs "No" indicating not using craning on the input screen M1 because the user will not use craning with the working machine 1, the rental setter 95, based on the rental information indicating such, makes a setting indicating that craning is not to be used (a selection to not use craning) during the rental period of the working machine 1.

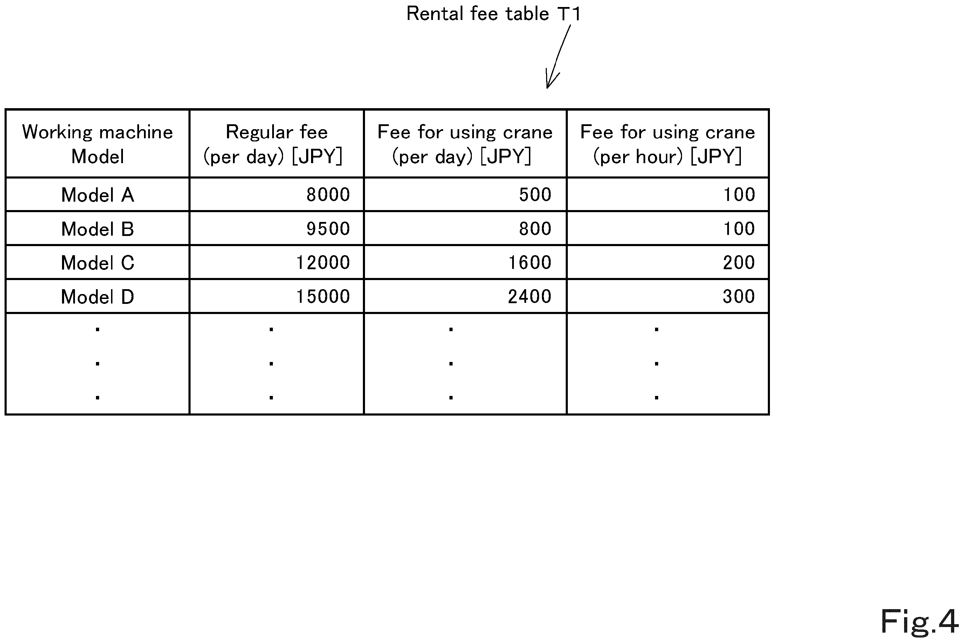

The fee calculator 96 calculates the rental fee for the working machine 1 based on the rental information (settings made by the rental setter 95) and on a rental fee table T1 as shown in FIG. 4. The rental fee table T1 is stored in the memory 97. Specifically, the fee calculator 96 calculates the rental fee for the working machine 1 using the equation "rental fee = [(regular fee for the model (per day) + fee for using crane (per day)] × the number of days of rental". That is, in the case where "using craning" is selected, the fee for using crane (per day) is added to the regular fee corresponding to the model of the working machine to be rented out to obtain the rental fee for the working machine 1 per day. In the case where "not using craning" is selected, the regular fee corresponding to the model of the working machine to be rented out alone is the rental fee for the working machine 1 per day.

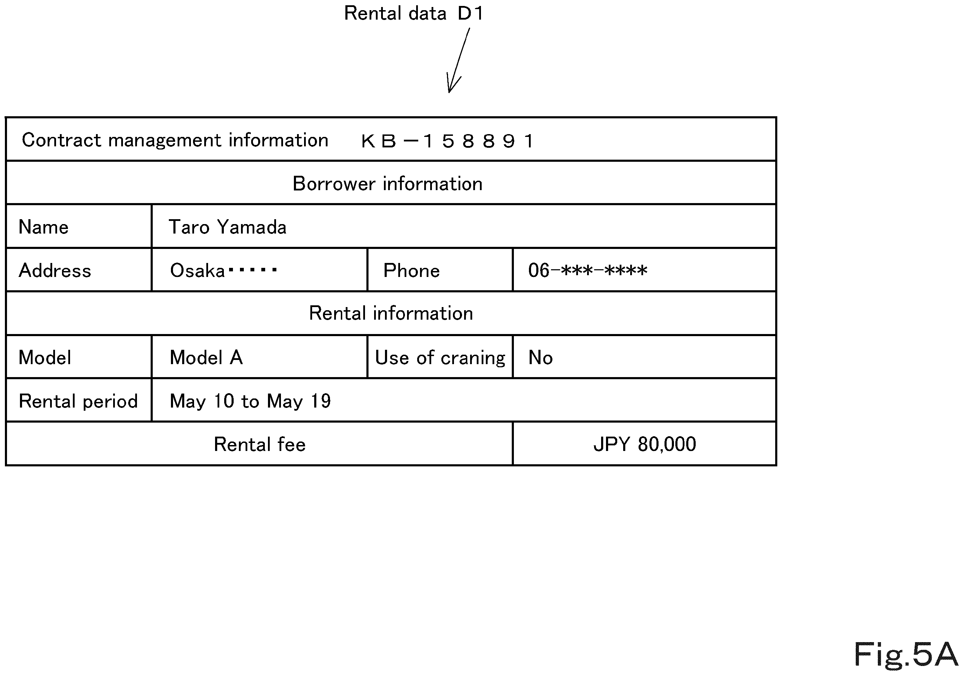

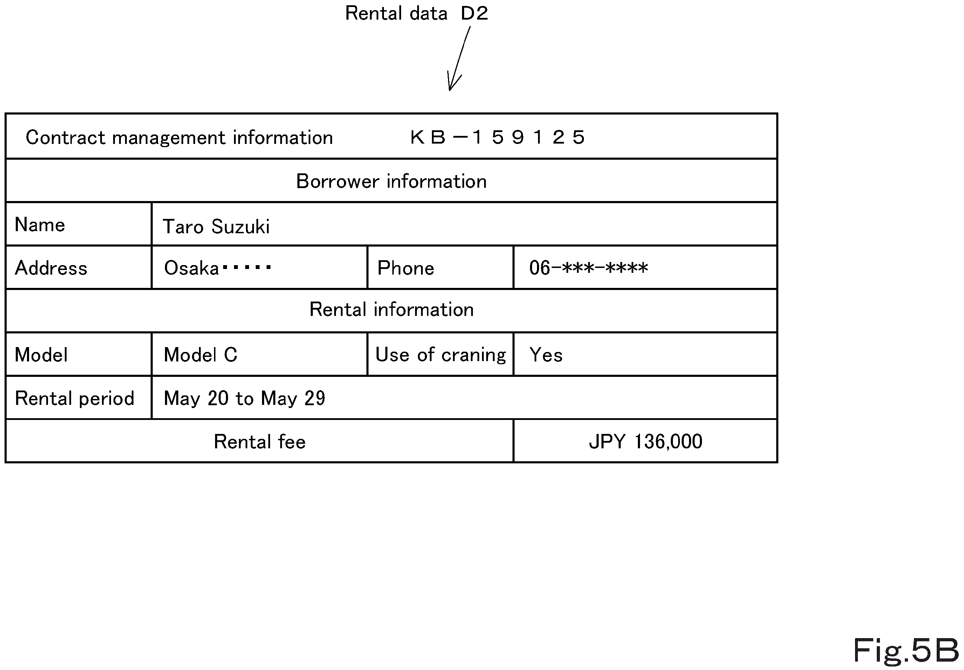

For example, in the case where a working machine 1 of model A is to be rented for ten days (May 10 to May 19) with the selection of "not using craning" as shown in FIG. 5A, the rental fee is "JPY 8,000 × 10 days = JPY 80,000". In the case where a working machine 1 of model C is rented for ten days (May 20 to May 29) with the selection of "using craning" as shown in FIG. 5B, the rental fee is "(JPY 12,000 + JPY 1,600) × 10 days = JPY 136,000".

Upon calculation of the rental fee for the working machine 1 by the fee calculator 96, information indicating the rental fee is transmitted from the manager 90 to the computer 91 or the portable terminal 92. Upon receipt of the information indicating the rental fee from the manager 90, the computer 91 or the portable terminal 92 causes the rental fee to be displayed on, for example, the input screen M1 (not illustrated).

After that, the user performs a predetermined operation on an interface of the computer 91 or the portable terminal 92 to make a formal request for rental of the working machine 1. Upon this, the rental setter 95 causes the memory 97 to store rental data D1 or D2 including borrower information, rental information, rental fee, and contract management information as shown in FIGS. 5A and 5B. With this, the settings for rental of the working machine 1 are completed.

After the settings for rental of the working machine 1 are completed, once the rental of the working machine 1 has been started, the manager 90 communicates with the controller 60 via the communicator 61 of the rented-out working machine 1 to monitor operating information about the working machine 1 during the rental period (period during which the working machine 1 is rented out). The operating information about the working machine 1 indicates the operating status of the working machine 1, and includes information indicating whether or not the crane mode was performed. The controller 60 detects the operating status of the working machine 1 at predetermined interval(s), and causes the communicator 61 to transmit operating information indicating the operating status to the manager 90.

Upon acquisition (receipt) of the operating information about the working machine 1, the manager 90 causes the memory 97 to store the operating information. The manager 90 determines whether or not the rented-out working machine 1 performed the crane mode based on the operating information about the working machine 1 and, if the working machine 1 performed the crane mode, determines that the working machine 1 had performed craning (crane control) over the period during which the crane mode was being performed.

If the craning is actually used or not used on the rented-out working machine 1 differently from the selection to use or not use the craning on the working machine 1 included in the settings made by the rental setter 95, the fee calculator 96 changes the rental fee for the working machine 1. Specifically, after the rental setter 95 makes a setting indicating the selection to not use craning of the working machine 1, if the manager 90 detects craning during the rental period of the working machine 1 (determines that the working machine 1 is in the crane mode), the fee calculator 96 determines the period of time or the number of days for which the craning has been performed from the operating information about the working machine 1, and increases the rental fee according to the determined period of time or number of days.

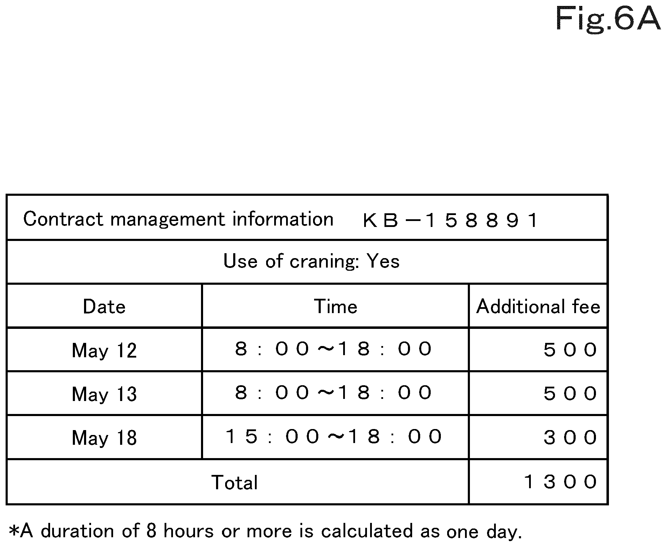

For example, assume that, in the case where the settings are such that a working machine 1 of model A is to be rented from May 10 to May 19 with the selection to not use craning as shown in FIG. 5A, the manager 90 detects, from the operating information about the working machine 1, craning performed on May 12, May 13, and May 18 as shown in FIG. 6A. In such a case, the fee calculator 96 multiplies the fee for using craning by the period of time or the number of days for which the craning has been performed to calculate additional fee(s) based on the rental fee table (FIG. 4), and calculate the sum of the additional fee(s) as JPY1,300.

In the case where the rental setter 95 makes a setting indicating a selection to use craning on the working machine 1 and then the manager 90 does not detect any craning during the rental period of the working machine 1, the fee calculator 96 determines the period of time or the number of days for which craning has not been performed based on the operating information about the working machine 1, and reduces the rental fee according to the determined period of time or the number of days.

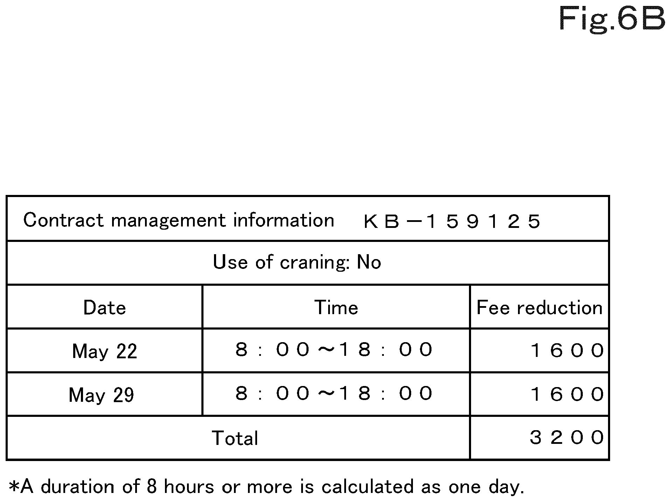

For example, assume that, in the case where the settings are such that a working machine 1 of model C is to be rented from May 20 to May 29 with the selection to use craning as shown in FIG. 5B, the manager 90 detects, from the operating information about the working machine 1, that craning was not performed on May 22 or May 29 as shown in FIG. 6B. In such a case, the fee calculator 96 multiplies the fee for using crane by the period of time or the number of days for which the craning has been performed to calculate additional fee(s) based on the rental fee table, and calculate the sum of the reduction(s) as JPY3,200.

After that, the user connects the computer 91 or the portable terminal 92 to the manager 90 when returning the rented working machine 1 to the lender (rental company). Upon connection of the computer 91 or the portable terminal 92 to the manager 90, the fee calculator 96 performs a payment process regarding the rental fee. In so doing, the fee calculator 96 extracts, from the content stored in the memory 97, the rental information corresponding to the rented-out working machine 1 and the operating information about the working machine 1, using the borrower information or the contract management information as keys.

Next, the fee calculator 96 determines whether or not the model, rental period, and the selection to use or not use craning indicated by the rental information match the model, rental period, and whether craning was actually used (performed) on the working machine 1 indicated by the operating information obtained during the actual rental period of the working machine 1. In so doing, in the case where the model, rental period, and the selection to use or not use craning indicated by the rental information match the model, rental period, and whether craning was actually used (performed) on the working machine 1 indicated by the operating information obtained during the actual rental period of the working machine 1, the rental fee calculated before the rental of the working machine 1 does not need to be changed, and therefore the fee calculator 96 ends the payment process.

On the contrary, if at least one of the model, rental period, or the selection to use or not use craning indicated by the rental information does not match the corresponding model, rental period, or whether craning was actually used (performed) on the working machine 1 indicated by the operating information obtained during the actual rental period of the working machine 1, the fee calculator 96 changes the rental fee based on the unmatched item(s) and the rental fee table (FIG. 4) T1.

For example, in the case where the user rented the working machine 1 on the condition that the user would not use craning but performed craning on May 12, May 13, and May 18 as shown in FIG. 6A, the fee calculator 96 increases the rental fee by adding additional fee(s) corresponding to the period of time or the number of days for which craning has been performed to the rental fee calculated before the working machine 1 was rented. Then, the manager 90 issues an invoice indicating the increased rental fee to the user, and notifies the computer 91 or the portable terminal 92 of the increased rental fee.

In the case where the user rented the working machine 1 on the condition that the user would use craning but did not perform craning on May 22 or May 29 as shown in FIG. 6B, the fee calculator 96 reduces the rental fee by subtracting amount(s) corresponding to the period of time or the number of days for which craning has been performed from the rental fee calculated before the working machine 1 was rented. Then, the manager 90 issues an invoice indicating the reduced rental fee to the user, and notifies the computer 91 or the portable terminal 92 of the reduced rental fee.

That is, in the case where the fee calculator 96 increases the rental fee in the payment process, the manager 90 performs a process to charge the user the additional fee. In the case where the fee calculator 96 reduces the rental fee in the payment process, the manager 90 performs a process to give the user a refund of the amount by which the rental fee was reduced.

In the above-described embodiments, the rental fee is increased in the case where not using craning is selected when the contract for renting the working machine 1 is concluded and thereafter the craning is performed during the rental period. Note, however, that the craning may be stopped remotely instead of increasing the rental fee. In such a case, if the manager 90 detects that "not using craning" was selected by the rental setter 95 and thereafter the craning (crane mode) was performed by the working machine 1 during the rental period of the working machine 1, the remote stopper 98 (FIG. 1) transmits, to the working machine 1 (rental machine), a stop signal to stop craning.

At the working device (rental machine) 1, upon receipt by the communicator 61 of the stop signal from the remote stopper 98, the controller 60 controls control valve(s) and/or the like of the working machine 1 to limit the actuation of the hydraulic actuators C3 to C5 or the operation of the operation member 22, thus stopping the craning (crane control). In so doing, the display 50 of the working machine 1 may display information indicating that the craning (crane control) is stopped forcibly by the manager 90, i.e., the rental company.

In the above-described embodiments, the manager 90 determines that craning was performed if the working machine 1 was in the crane mode. Note, however, that this does not imply any limitation. Additionally or alternatively, for example, a sensor 79 (FIG. 1) to detect the position of the bucket 17 (FIG. 7) in a vertical direction perpendicular to the rotational axis of the bucket 17 (the position in Y direction) and the position of the bucket 17 in a front-rear direction (the position in X direction) may be provided, and whether or not craning was performed may be determined based on the output of the sensor 79.

In such a case, the controller 60 or the manager 90 may evaluate the movement of the rotational axis of the bucket 17 based on the position of the bucket 17 in the vertical direction and the position of the bucket 17 in the front-rear direction detected by the sensor 79, and may determine that craning was performed if the rotational axis of the bucket 17 made movement corresponding to craning. Additionally or alternatively, for example, the controller 60 or the manager 90 may determine that craning was performed if the sensor 79 detected that the bucket 17 was raised or lowered vertically (in Y direction) with the bottom (bottom surface facing the ground) of the bucket 17 substantially horizontal and the position of the bucket 17 substantially horizontal and thereafter the sensor 79 detected that the position of the bucket 17 moved in the front-rear direction (X direction).

For another example, the working machine 1 may be provided with a sensor to detect whether or not a hook for craning is retracted, and the controller 60 or the manager 90 may determine that craning was not performed if the hook was in the retracted state and may determine that craning was performed if the hook was in the unretracted state.

In the above-described embodiment, the display 50 may display the period of time for which the working machine 1 has performed craning (the period of time for which the working machine 1 has been in the crane mode or the period of time for which the bucket 17 has performed an action corresponding to craning) during the rental period of the working machine 1. Additionally or alternatively, the display 50 may display the point in time at which craning was started and the point in time at which craning was stopped, as the period of time for which the working machine 1 has performed craning. Additionally or alternatively, the display 50 may display the total time for which craning has been performed, as the period of time for which the working machine 1 has performed craning.

The display 50 of the working machine 1 may display an indication that there will be an additional fee for craning if a setting indicating a selection to not use craning on the working machine 1 is made by the rental setter 95 and thereafter the manager 90 detects the craning during the rental period of the working machine 1. Additionally or alternatively, the manager 90 may provide, to the computer 91 or the portable terminal 92 of the user, a notification indicating that the working machine 1 is performing or is about to perform craning requiring an additional fee.

In the examples discussed in the above-described embodiments, the manager 90 includes the rental setter 95, the fee calculator 96, and the remote stopper 98. Alternatively, for example, the rental setter 95, the fee calculator 96, and/or the remote stopper 98 may be provided in different electronic devices or may include application program(s) in the cloud.

In the above-described embodiment, craning is discussed as an example of the special action of the working machine 1. Note, however, that this does not imply any limitation. Besides craning, for example, the special action of the working machine 1 may be an action that can be performed by attaching, to the working machine 1, a hydraulic breaker, a hydraulic crusher, an angle broom, an earth auger, a pallet fork, a sweeper, a mower, a snow blower, or some other attachment, instead of or in addition to the bucket 17. In such a case, for example, the controller 60 or the manager 90 may identify the attached attachment based on the output of sensor(s), image(s) captured by camera(s) or the like, and/or the settings on the hydraulic system of the working machine 1. The special action of the working machine 1 may be a remote controlled action of the working machine 1, an action using a machine guidance function, an action performed by the working machine 1 in a linked manner with another working machine(s) and/or truck(s) while communicating with the working machine(s) and/or truck(s), or the like.

A working machine rental system 100 according to one or more embodiments as has been described includes a rental setter 95 to make one or more settings for use in renting out a working machine 1 configured to perform a special action (such as craning), the one or more settings including a selection to use or not use the special action, and a fee calculator 96 to calculate a rental fee for the working machine 1 based on the one or more settings made by the rental setter 95, and change the rental fee for the working machine 1 if the special action is actually used or actually not used differently from the selection to use or not use the special action included in the one or more settings made by the rental setter 95. With this, when a working machine 1 configured to perform a special action is rented out, it is possible to calculate a rental fee corresponding to the selection to perform or not perform the special action and change the rental fee.

In one or more embodiments, the working machine rental system 100 further includes a display 50 to, during a rental period of the working machine 1, display a time at or during which the special action was performed. With this, since the display 50 displays the time at or during which the special action was performed, it is possible for the user (operator) or the like of the working machine 1 to easily know the time at or during which the special action was used.

In one or more embodiments, the fee calculator 96 increases the rental fee if the one or more settings made by the rental setter 95 include the selection to not use the special action and the special action is performed during the rental period of the working machine 1. This makes it possible to increase the rental fee in the case where "not using special action" is selected when the contract for renting the working machine 1 is concluded and the special action is performed during the rental period of the working machine.

In one or more embodiments, the fee calculator 96 reduces the rental fee if the one or more settings made by the rental setter 95 include the selection to use the special action and the special action is not performed during the rental period of the working machine 1. This makes it possible to reduce the rental fee in the case where "using special action" is selected when the contract for renting the working machine 1 is concluded and the special action is not performed during the rental period of the working machine.

In one or more embodiments, the working machine rental system 100 further includes a remote stopper 98 to remotely stop the special action if the one or more settings made by the rental setter 95 include the selection to not use the special action and the special action is performed during the rental period of the working machine 1. This makes it possible to force stop the special action in the case where "not using special action" is selected when the contract for renting the working machine 1 is concluded and the special action is performed during the rental period of the working machine 1 infringing the contract.

While embodiments have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Working machine
- 50: Display
- 95: Rental setter
- 96: Fee calculator
- 98: Remote stopper
- 100: Working machine rental system

## Claims

1. A working machine rental system comprising:
a rental setter to make one or more settings for use in renting out a working machine configured to perform a special action, the one or more settings including a selection to use or not use the special action; and
a fee calculator to:
calculate a rental fee for the working machine based on the one or more settings made by the rental setter; and
change the rental fee for the working machine if the special action is actually used or actually not used differently from the selection to use or not use the special action included in the one or more settings made by the rental setter.

2. The working machine rental system according to claim 1, further comprising a display to, during a rental period of the working machine, display a time at or during which the special action was performed.

3. The working machine rental system according to claim 1 or 2, wherein the fee calculator increases the rental fee if the one or more settings made by the rental setter include the selection to not use the special action and the special action is performed during a rental period of the working machine.

4. The working machine rental system according to any one of claims 1 to 3, wherein the fee calculator reduces the rental fee if the one or more settings made by the rental setter include the selection to use the special action and the special action is not performed during a rental period of the working machine.

5. The working machine rental system according to any one of claims 1 to 4, further comprising a remote stopper to remotely stop the special action if the one or more settings made by the rental setter include the selection to not use the special action and the special action is performed during a rental period of the working machine.

6. The working machine rental system according to any one of claims 1 to 5, wherein the special action is craning.

7. The working machine rental system according to any one of claims 1 to 5, wherein the special action is an action performed by the working machine with an attachment other than a bucket attached thereto.
